Europäisches Patentamt

European Patent Office

Office européen des brevets

(19)

(11) Publication number: **0 317 670 B1**

(12) # EUROPEAN PATENT SPECIFICATION

(45) Date of publication of patent specification: **18.03.92**  (51) Int. Cl.⁵: **A01D  87/12**

(21) Application number: **87202346.0**

(22) Date of filing: **27.11.87**

─────────────

(54) **Bale handling apparatus having plurality of bale pick-up devices.**

─────────────

(43) Date of publication of application:
**31.05.89 Bulletin  89/22**

(45) Publication of the grant of the patent:
**18.03.92 Bulletin  92/12**

(84) Designated Contracting States:
**DE FR GB**

(56) References cited:
**EP-A- 0 113 144**
**FR-A- 2 370 422**

(73) Proprietor: **FORD NEW HOLLAND N.V.**
**Leon Claeysstraat 3a**
**B-8210 Zedelgem(BE)**

(72) Inventor: **Naaktgeboren, Adrianus**
**Vogelwikkestraat 7**
**B-8211 Zedelgem (Veldegem)(BE)**

(74) Representative: **Vandenbroucke, Alberic T.J.**
**FORD NEW HOLLAND N.V. Leon Claeysstraat**
**3A**
**B-8210 Zedelgem(BE)**

Rank Xerox (UK) Business Services

EP 0 317 670 B1

## Description

This invention relates to bale handling apparatus and more particularly, to such apparatus for handling bales of crop material of the so-called rectangular type.

It is common practice for crop material such as straw or hay, for example, to be formed into so-called rectangular bales by a baling machine. Such a baling machine drops completed bales the one after the other to the ground, unless it is fitted with a bale handling equipment, and thus it is necessary to subsequently pick up these individual bales scattered randomly over a field and load them on to a bale wagon, or other vehicle, for transport to a required location.

For many decades relatively small rectangular bales produced by conventional small rectangular balers were popular. Such bales were handled either manually or mechanically. Different types of bale handling equipment have been in use for many years to handle such bales mechanically. However, during recent years new balers producing much larger rectangular bales appeared on the market. Bales produced with such machines can be handled only mechanically. However, the various so-called "medium size" and "large rectangular balers" presently already on the market produce bales of widely different dimensions. As an example, one such baler, which commonly is indicated as a "medium size rectangular baler", produces bales measuring approximately 60 cm by 90 cm and having a length of 1.2 m up to 2.5 m. Another baler, equally identified as a medium size rectangular baler produces bales measuring approximately 90 cm by 90 cm and equally having a length which can vary quite substantially.

Accordingly, there is a much wanted need for a bale handling equipment which is capable of picking up such individual bales scattered randomly over a field and of organizing them into regular packs for loading onto a bale wagon, or other vehicle, for transport to a required location.

One example of a known bale handling equipment of the type with which the present invention is concerned, is disclosed in US-A-4.548.535. This equipment comprises three carrier frames on which are mounted respective sets of claw means for picking up bales. These claw means are designed to pick up three bales disposed in side-by-side relationship. In order to minimize the overall width of such a pack of three bales when picked up by the equipment, primarily to meet official requirements regarding widths of loads, it is necessary to provide relatively elaborate arrangements to effect relative lateral displacement between the three sets of claw means. Accordingly, this prior equipment is expensive and furthermore also suffers from the disadvantage that each set of claw means has associated with it individually operated hydraulic actuating means for moving the claws of the set into and out of engagement with a bale, and this also increases the complexity and cost of the equipment.

It therefore is the objective of the present invention to provide a bale handling equipment of the type referred to hereabove and which is simple in design and yet versatile in use.

According to the invention a bale handling apparatus is provided which comprises :

- a generally transversely extending main frame;
- a plurality of independent bale pick-up devices mounted on the main frame and each having movable tine means which, in an operative position engage a bale and in an inoperative position are retracted clear of a bale, and
- actuator means associated with each respective bale pick-up device and operable to move the movable tine means thereof to and from the operative position, and which is charaterized in that :
- the actuator means of the respective bale pick-up devices are connectable in parallel to common drive means and,
- releasable locking means are associated with the movable tine means of each bale pick-up device for locking said movable tine means in the inoperative position; the arrangement being such that only those movable tine means which are unlocked against movement to the operative position and have not already achieved the latter position, will be moved to said operative position when the common drive means is operated to energize the actuator means in the sense for moving the movable tine means to the operative position.

Each bale pick-up device preferably comprises a main beam extending generally perpendicularly to the generally transverse main frame and which operatively supports the corresponding movable tine means generally at or adjacent its forward end. The actuator means and common drive means preferably are of the hydraulic type.

Each bale pick-up device is provided with bale sensing means associated with the locking means of each said pick-up device in a manner such that the locking means are moved to the unlocking position when the bale sensing means sense a bale which is properly positioned relative to said bale pick-up device and is ready for being picked up thereby. The bale sensing means of each bale pick-up device comprise a bell-crank lever which is operably connected to the corresponding locking means of said pick-up device and which includes an arm which in use, is engaged and moved by a bale positioned as indicated herebefore.

The releasable locking means of each bale pick-up device preferably comprise :
- a linkage system coupled to the movable tine means of said pick-up device for movement in unison therewith, and
- a locking member releasably co-operable with said linkage system to allow or prevent, as appropriate, movement of that system and as a consequence, also of the movable tine means to which said system is coupled.

The linkage system of each pick-up device preferably comprises a rod operatively associated at one end with the corresponding movable tine means and pivotally connected at the other end to one end of a link, the other end of which is pivotally mounted on the main beam of said bale pick-up device; the rod and the link providing an extensible member which is held in a retracted position by the corresponding locking member when the latter is in the locking position to prevent movement of said movable tine means to the operative position from the inoperative position and which is permitted to move to the extended position by the movement of said movable tine means from the inoperative postion to the operative position when said locking member is in the unlocking position.

The locking member of each bale pick-up device preferably is provided with a hooked end which is cooperable with the corresponding linkage system to effect a locking of the corresponding movable tine means in the inoperative position and which forms part of a bell-crank lever which is pivotally mounted on the main beam of said pick-up device and which is operatively coupled to the corresponding bale sensing means for being moved thereby to the unlocking position when the bale sensing means senses a bale; the releasable locking means further also comprising resilient means acting between said main beam and said locking bell-crank lever to urge the hooked end of the locking member thereof to the locking position.

A bale handling apparatus in accordance with the present invention will now be described in greater detail, by way of example, with reference to the accompanying drawings, in which:

Figure 1 is a side view of the apparatus,

Figure 2 is a partial plan view of the apparatus shown in Figure 1, and

Figure 3 is a hydraulic circuit employed in the apparatus of Figures 1 and 2.

The terms "forward", "rearward", "left" and "right" used throughout the specification are determined with reference to the direction of forward operative travel of the baling machine and are not to be considered as limiting. Also, the terms "upper" and "lower" are used throughout the specification principally for convenience and it should be understood that these terms equally are not to be construed as limiting.

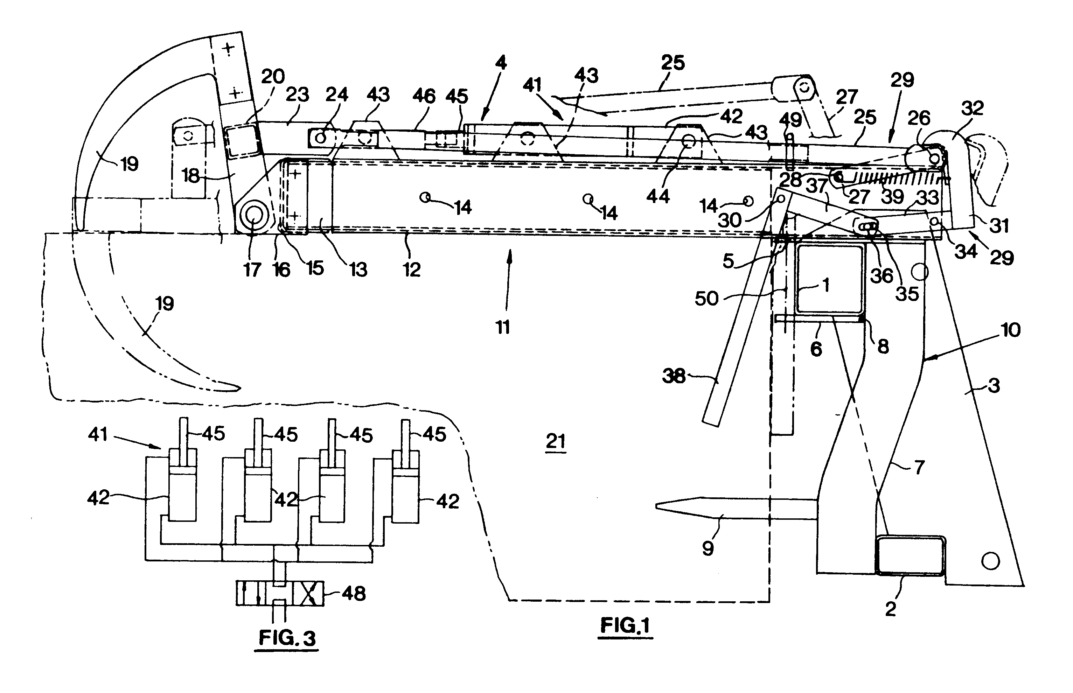

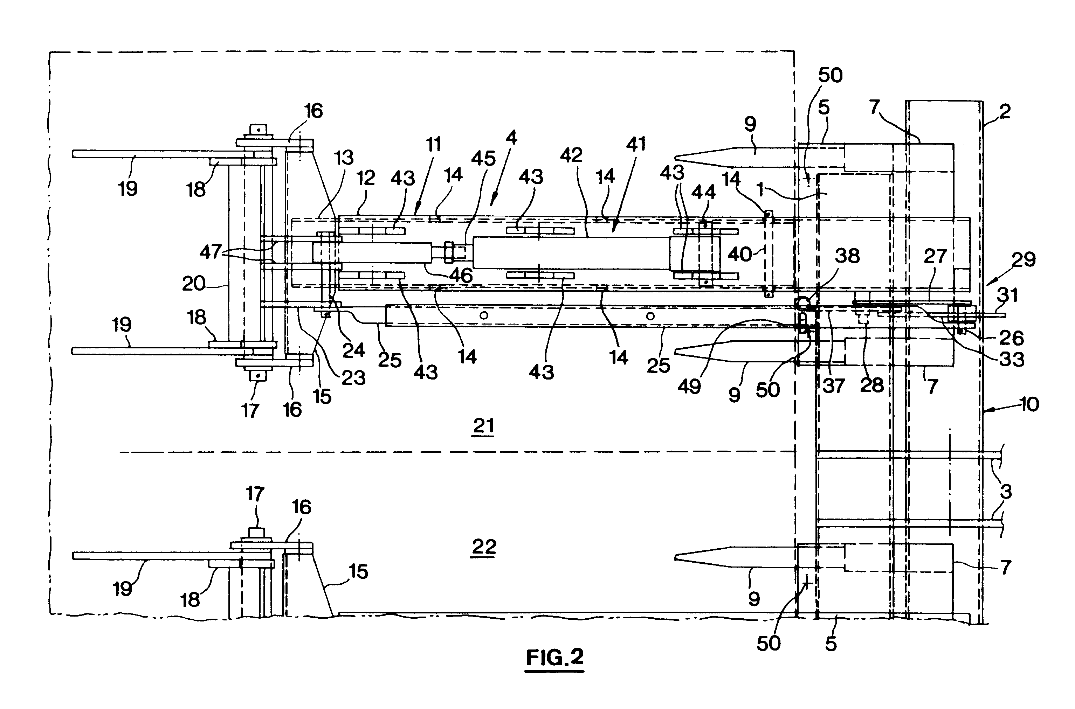

Refering first to Figures 1 and 2 of the drawings, the bale handling apparatus comprises a base or main frame 10 comprising a main and transverse carrier beam 1 of rectangular cross-section, and a secondary transverse beam 2 also of rectangular cross-section. The beams 1 and 2 are connected by two pairs of generally vertical plates 3. Each pair of plates 3 is spaced apart by a distance sufficient to receive therebetween respective arms of a front end loader attachment for a tractor, or other vehicle; neither the tractor nor the front end loader attachment being shown in Figures 1 and 2. On this simple base frame 10 there are provided a plurality of identical bale pick-up devices in the form of bale grab modules 4. Each module is slidably mounted on the main carrier beam 1 by way of two opposed mounting plates 5 and 6; the plate 5 being attached to the upper end of a corresponding pair of cranked members 7, and the plate 6 being hingedly connected to these cranked members 7 at 8. The outer ends of the plates 5 and 6 extend beyond the corresponding face of the beam 1 and are apertured to receive bolts (only schematically shown at 50) which are used to clamp a module 4 in any selected position on the beam 1. The plate 6 is hinged to the cranked members 7 in order to facilitate assembly and removal of the module 4 on the main beam 1. The lower end of each cranked member 7 bears against the forward face of the secondary beam 2 and carries a fixed bale-engageable tine or spike 9, each module 4 thus having a pair of spaced-apart tines or spikes 9.

In the illustrated embodiment, four bale grab modules 4 are provided, spaced along the main transverse beam 1 and with the middle two modules 4 being mounted between the pairs of connecting plates 3. These middle two modules 4 are not normally removed from the apparatus once assembled, but they are capable of being slid along the beam 1 to selected relative positions thereon. The outer two modules 4 may be removed from the apparatus, when only two modules are required. It will be appreciated at this stage, that the bale handling apparatus can be provided with more than four bale grab modules 4, it merely being necessary to provide an appropriate length of main beam 1 and secondary beam 2 consistent with providing the necessary structural strength to these beams 1, 2 in order to accommodate the weight of the fully loaded apparatus. To this end, the beams 1 and 2 may be made telescopic.

Each bale grab module 4 further comprises a telescopic main beam 11 extending forwardly from the top mounting plate 5 and comprising outer and inner members 12 and 13, respectively, of rectangular cross-section. The adjustability of the length of the beam 11 of each bale grab module 4 is provided so that the apparatus can be adjusted to accommodate bales of any length between the standard lengths of 1.2 m to 2.5 m. The outer and inner members 12, 13 of each beam 11 are provided with a series of apertures 14 which can be aligned and a pin, bolt or other device 40 inserted therein so as to secure the beam in an adjusted position.

The inner member 13 of the main beam 11 of each module 4 has attached thereto at its forward end a mounting bracket 15 provided with a mounting plate 16 at each end thereof; the mounting plates 16 carrying therebetween a pivot pin 17 on which is mounted a pair of carrier arms 18 for a pair of spaced, movable bale-engageable tines or spikes 19. The arms 18 are interconnected by a beam 20. Each tine 19 curves downwardly from the corresponding carrier arm 18 and has a pointed end for ease of insertion into a bale to be picked up; such a bale being indicated in outline at 21 in Figures 1 and 2 of the drawings and a second and adjacent bale being indicated at 22 in Figure 2 of the drawings. The tines 19 are releasably attached to the corresponding carriers 18 on each module 4 in order that they can readily be reversed for shipment and/or transport purposes. The tine carrier beam 20 of each module 4 has a mounting arm 23 attached thereto. Each one of these arms 23 receives an end of a pivot pin 24 to which is pivotally attached a flattened end of a telescopic rod 25; the other end of which is also flattened and is connected, via a pivot pin 26, to one end of a corresponding link 27. The other end of each one of these links 27 is pivotally attached at 28 to the corresponding main beam 11. The rods 25 and the links 27 provide, in effect, an extensible linkage system; the members of which are cooperable with corresponding locking members 31. Each one of these locking members 31 has a hooked end 32 which is releasably engageable with the pivotal coupling 26 between the corresponding rod 25 and link 27 to retain said rod 25 and link 27 in a retracted position. Each locking member 31 is rigidly connected to a link 33 which is pivotally mounted at 34 intermediate its ends to the corresponding main beam 11. The other end of each link 33 is provided with a slot 35 which is engageable by a pin 36 attached to one end of an arm 37 of a bell-crank lever; the other arm 38 of which is disposed in front of the main tranverse beam 1 of the base frame 10 and extends at an angle so as to incline forwardly of the apparatus relative to the normal direction of movement thereof in picking up bales. Each bell-crank lever 37, 38 is pivotable about a pivot 30 on the corresponding main beam 11 and in effect, forms a bale sensing means. Each locking member 31 and associated link 33 also form a bell-crank lever. A spring 39 acts between each locking member 31 and the pivot 28 of the corresponding link 27 so as to urge said locking member 31 in the locking direction, i.e. into engagement with the corresponding pivot 26. Each rod 25 is telescopic so as to be adjustable to match the adjustment of the corresponding main beam 11, the inner and outer members of each said rod being apertured so that a pin, bolt or the like 49 can be inserted in aligned apertures to secure each said rod 25 in an adjusted position in a manner similar to the adjustment of the corresponding main beam 11. The extensible linkage system including the rod 25 and the link 27 on the one hand and the locking bell-crank members 31, 33 on the other hand form part of locking means for the movable tine means 19 and which are indicated in general in the drawings with reference numeral 29.

A double-acting hydraulic actuator 41 is provided on each bale grab module 4. The cylinder 42 of each actuator 41 is pivotally mounted between a pair of lugs 43 on a pivot pin 44; the lugs being mounted on the corresponding main beam 11. To accommodate different lengths of bales, several pairs of lugs 43 are provided along the length of the fixed part 12 of the telescopic main beam 11; the cylinder 42 being pivotally connectable to any one of said pairs of lugs 43. The piston 45 of each hydraulic actuator 41 is connected to a rod 46 which itself in turn is pivotally coupled to the pivot pin 24 between a pair of mounting lugs 47 attached to the corresponding carrier member 18, between which lugs the pivot pin 24 extends. The hydraulic actuators 41 of all modules 4 employed in a given arrangement of the bale handling apparatus are connected hydraulically in parallel to a supply of pressure fluid via a control valve 48 which is shown in Figure 3 of the drawings. The control valve 48 is of conventional type and in one control position, connects one end of the respective cylinders 42 of the actuators 41 to pressure fluid; and in the other control position, connects the opposite ends of the cylinders to pressure fluid, with an intermediate or neutral position of the valve 48 serving to pass pressure fluid to the tank.

In operation, the bale handling apparatus according to the present invention is first arranged as required by way of fitting the requisite number of bale grab modules 4 to the main transverse beam 1; the hinged mounting plates 6 serving to facilitate basic assembly of the modules on to the beam 1, as well as facilitating adjustment thereof along that beam, as already mentioned. The hydraulic connections to the respective ends of each cylinder 42 then are made, via releasable self-sealable couplings, to a manifold to which the control valve 48 is connected which itself normally is part of the standard hydraulic system of the tractor or other vehicle onto which the bale handling apparatus is mounted. Once the number of modules 4 has been selected for a given operation, the spacing thereof is then adjusted to suit the selected manner of handling the bales, i.e. by way of picking then up with either the 60 cm nominal face resting on the ground or with the 90 cm nominal face resting on the ground, in case bales of 60 cm by 90 cm are being handled.

The telescopic main beams 11 further also are adjusted according to the length of the bales to be handled. These beams 11 preferably are adjusted so that the curved tines 19 are positioned generally at two thirds of the length of the bales when the latter are held by the apparatus.

Having decided upon the basic format of the apparatus to be employed in a given bale handling operation, the apparatus is then mounted on the front end loader attachment arms of a tractor or other vehicle and the vehicle is driven towards a bale or set of bales to be picked up. For convenience of description, it will be assumed that bales are to be picked up singly. This is accomplished by first driving the tractor or other vehicle towards a selected bale, with the apparatus being held at a height such that the undersides of the main beams 11 of the bale grab modules 4 are positioned approximately at the same level as the top of the bale to be picked up; this height again depending on whether the bales are resting on their 60 cm face or 90 cm face. The operator then selects which of the four modules 4 (as regards the illustrated embodiment employing four modules) is to be used to pick up the first bale (it being immaterial which module is used); the selected module then being positioned generally centrally of that bale as the latter is approached by the apparatus. A bale approached in this manner first of all is engaged by the fixed tines or spikes 9 and then immediately thereafter engages the arm 38 of the selected module 4. This causes the bell-crank lever 38, 37 to be rotated anticlockwise, as seen in Figure 1 of the drawings, about the pivot 30. This, in turn, causes a pivoting of the locking member 31 in the clockwise direction about the pivot point 34. Thus, the hooked end 32 of the locking member 31 of the bale grab module in question disengages the pivotal coupling 26 between the corresponding rod 25 and link 27. When the bale to be picked up is in position, the tractor or other vehicle operator operates the control valve 48 in order to supply pressure fluid to the hydraulic actuators 41 such as to extend the same.

However, it should be noted that, whilst all the actuators 41 of the modules 4 employed in a given arrangement of the apparatus are connected to receive pressure fluid by this action of the control valve 48, only the one actuator 41 associated with the module 4 selected to pick up the bale in question will extend because the associated rod 25 has been unlocked, whereas the rods 25 of the remaining modules 4 remain locked which thus prevent the associated actuators 41 from being extended. Extension of the actuator 41 of the selected module 4 pivots the pair of curved tines 19 anticlockwise as seen in Figure 1 of the drawings. This movement is accommodated, as far as the associated rod 25 is concerned, by the link 27 providing an effective extension of that rod; the components 25 and 27 taking up the position shown in phantom in Figure 1 of the drawings. Upon rotary movement of the tines 19 of the selected module 4, the pointed ends thereof are inserted into the top surface of the bale and thus the bale is now securely gripped between the tines 9 and 19 such that, if the front end loader attachment is now lifted, the engaged bale is also lifted along with the basic apparatus. The tractor or other vehicle can now be driven to a second bale whereafter the same operation is repeated; the operator again selecting the next module 4 for receiving the second bale. This is repeated until the apparatus has picked up a full complement of bales or a reduced number, according to circumstances. It should be noted that once a bale has been picked up, the control valve 48 is deactuated and then actuated again when the next bale is to be picked up, an so on.

It will be appreciated that, if there are four bale grab modules 4 provided in a given arrangement of the bale handling apparatus, then it also is possible to pick up two, three or four bales simultaneously, provided that they are generally located together. In this regard, the bales do not have to be tightly packed adjacent one another because, any bale which is generally spaced apart from the other bales in a transverse direction, can be regularized by the use of a beam (not shown) on the apparatus. Said beam can be brought into engagement with an end bale whereafter the tractor or other vehicle then can be turned in the appropriate direction generally to move all bales into close contact with each other. It will be appreciated that any displacement of a bale from a general stack in the longitudinal direction also will be corrected as the apparatus is driven into the stack of bales.

In order to discharge bales from the apparatus, the control valve 48 is actuated in the opposite sense so as to pressurize the other ends of the actuators 41 so as to contract the same. This results in the tines 19 being withdrawn from the bales and in an attendant movement of the rods 25 to the original and full line positions of Figure 1. The bales, at this stage, are still engaged by the fixed tines 9 and all that is necessary in order to effect final discharge of the bales is for the tractor or other vehicle to back off from the stack so as to retract the tines 9 from the bales. As soon as the bales have been released from the fixed tines 9, the arms 38 of the bell-crank levers 37, 38 are released whereafter the springs 39 operate to pull the locking members 31 back into locking engagement with the pivot pins 26 and thus also move the bell-crank lever arms 38 back to their original positions, ready for engagement by further bales to be picked up.

It should be noted that the vertical displacement between the pivot axes 26 and 28 of each link 27 is relatively small. This is a feature of the design whereby, when the locking member 31 of a given module 4 is still engaged with the associated pivot 26 and when a given actuator 41 is pressurized such as to tend to extend the same, the force exerted via the rod 25 upon the link 27 in the sense to pivot said link 27 in the anticlockwise direction as seen in Figure 1, is relatively small, whereby the force required to release the locking member 31 is also relatively small and thus readily accomplished by the engagement of a bale with the arm 38.

Figures 1 and 2 of the drawings illustrate bales being picked up with their shorter size (e.g. 60 cm) resting on the ground. However it is also possible for bales to be picked up with their longer sides (e.g. 90 cm) resting on the ground although therefore, some transverse adjustment of the bale grab modules 4 is then desirable. Basically, the two central modules 4 should be moved close together, with the two outer modules being positioned accordingly so as to accommodate three bales on their longer sides. If the apparatus is to be used with bales which are shorter or longer than those previously handled, then the main beam 11 of each module 4 needs to be retracted, respectively extended, together with appropriate corresponding adjustment of the rod 25 in the manner described above.

It will be seen that the present invention provides a bale handling apparatus of extremely simple construction and yet possessing a versatility which enables the apparatus readily to be adjusted to handle a selected number of bales and also bales in the one or other orientation without difficulty. This facility is afforded by the provision of identical bale grab modules which can be brought into use and/or adjusted, extremely simply.

It will also be seen that the apparatus according to the present invention advantageously may be used for grouping randomly positioned bales in groups of 2, 3, 4 or evenmore bales. Similarly the apparatus further also is very practical for grouping and stacking bales in stacks comprising a plural number of layers of bales with each layer comprising e.g. 3 or 4 bales and with adjacent layers being turned 90° with respect to each other so as to form particularly stable stacks.

Furthermore, the apparatus according to the invention can be operated with the standard hydraulics of an agricultural tractor and is very simple in use because only one hydraulic valve has to be actuated for operating any one of the bale grab modules; the arrangement being such that the hydraulic system of said any one module is triggered by a bale positioned to be picked up by said module.

Other aspect of the illustrated embodiment are described and claimed in co-pending European Patent Application No.

**Claims**

1. A bale handling apparatus comprising :
   - a generally transversely extending main frame (10);
   - a plurality of independent bale pick-up devices (4) mounted on the main frame (10) and each having movable tine means (19) which, in an operative position engage a bale (21, 22) and in an inoperative position are retracted clear of a bale (21, 22), and
   - actuator means (41) associated with each respective bale pick-up device (4) and operable to move the movable tine means (19) thereof to and from the operative position.
        characterized in that :
   - the actuator means (41) of the respective bale pick-up devices (4) are connectable in parallel to common drive means and,
   - releasable locking means (29) are associated with the movable tine means (19) of each bale pick-up device (4) for locking said movable tine means (19) in the inoperative position; the arrangement being such that only those movable tine means (19) which are unlocked against movement to the operative position and have not already achieved the latter position, will be moved to said operative position when the common drive means is operated to energize the actuator means (41) in the sense for moving the movable tine means (19) to the operative position.

2. A bale handling apparatus according to claim 1 characterized in that each bale pick-up device (4) comprises a main beam (11) extending generally perpendicularly to the generally transverse main frame (10) and which operatively supports the corresponding movable tine means (19) generally at or adjacent its forward end.

3. A bale handling apparatus according to claim 1 or 2 characterized in that the actuator means (41) and common drive means are of the hydraulic type.

4. A bale handling apparatus according to any of the preceding claims characterized in that each bale pick-up device (4) is provided with bale sensing means (37, 38); said bale sensing means (37, 38) of each pick-up device (4) being associated with the locking means (29) of each said pick-up device (4) in a manner such that the locking means (29) are moved to the unlocking position when the bale sensing means (37, 38) sense a bale (21, 22) which is properly positioned relative to said bale pick-up device (4) and is ready for being picked up thereby.

5. A bale handling apparatus according to claim 4, characterized in that the bale sensing means (37, 38) of each bale pick-up device (4) comprise a bell-crank lever (38, 37) which is operably connected to the corresponding locking means (29) of said pick-up device (4) and which includes an arm (38) which, in use, is engaged and moved by a bale (21, 22) properly positioned relative to said bale pick-up device (4) and ready for being picked up thereby.

6. A bale handling apparatus according to any of the preceding claims characterized in that the releasable locking means (29) of each bale pick-up device (4) comprise :
   - a linkage system (25, 27) coupled to the movable tine means (19) of said pick-up device (4) for movement in unison therewith; and
   - a locking member (31) releasably cooperable with said linkage system (25, 27) to allow or prevent, as appropriate, movement of that system (25, 27) and as a consequence, also of the movable tine means (19) to which said system (25, 27) is coupled.

7. A bale handling apparatus according to claim 6 when appended to claim 2 characterized in that the linkage system (25, 27) of each bale pick-up device (4) comprises a rod (25) operatively associated at one end with the corresponding movable tine means (19) and pivotally connected at the other end (26) to one end of a link (27), the other end (28) of which is pivotally mounted on the main beam (11) of said bale pick-up device (4); the rod (25) and the link (27) providing an extensible member which is held in a retracted position by the corresponding locking member (31) when the latter is in the locking position to prevent movement of said movable tine means (19) to the operative position from the inoperative position and which is permitted to move to the extended position by the movement of said movable tine means (19) from the inoperative position to the operative position when said locking member (31) is in the unlocking position.

8. A bale handling apparatus according to claim 7 when additionally also appended to either claim 4 or 5, characterized in that the locking member (31) of each bale pick-up device (4) is provided with a hooked end (32) which is cooperable with the corresponding linkage system (25, 27) to effect a locking of the corresponding movable tine means (19) in the inoperative position and which forms part of a bell-crank lever (31, 33) which is pivotally mounted on the main beam (11) of said pick-up device (4) and which is operatively coupled to the corresponding bale sensing means (37, 38) for being moved thereby to the unlocking position when the bale sensing means (37, 38) senses a bale (21, 22); the releasable locking means (29) further also comprising resilient means (39) acting between said main beam (11) and said locking bell-crank lever (31, 33) to urge the hooked end (32) of the locking member (31) thereof to the locking position.

9. A bale handling apparatus according to claim 2 or any of the claims 3 to 8 when appended to claim 2 characterized in that :
   - the main beam (11) of each bale pick-up device (4) is telescopingly adjustable, and
   - the movable tine means (19) of said bale pick-up device (4) are provided generally at or adjacent the free end of the telecopic part (13) of said main beam (11); the arrangement being such as to accomodate varying lengths of bales (21, 22) to be handled by the apparatus.

10. A bale handling apparatus according to claim 9 characterized in that the actuator means (41) of each bale pick-up device (4) extend between the movable tine means (19) and the fixed part (12) of the telescopic main beam (11) of said pick-up device (4); said actuator means (41) being connectable to said fixed part (12) of the telescopic main beam (11) at a number of positions along the length thereof in order to accomodate differing lengths of bales (21, 22) to be handled by the apparatus.

11. A bale handling apparatus according to claim 9 or 10 when appended to claim 7, characterized in that the rod (25) of the linkage system (25, 27) of the locking means (29) is telescopic in order that the length thereof can be adjusted to accomodate varying lengths of bales (21, 22) to be handled by the apparatus.

12. A bale handling apparatus according to claim 8 when appended to claim 7, characterized is that :
   - the two pivot points (26, 28) of the link (27) forming part of the linkage system (25, 27) are displaced from one another by a relatively small distance when said linkage system (25, 27) is in the retracted position and as seen in the generally perpendicular direction relative to the orientation of the rod (25) of said system (25, 27); and
   - the hooked end (32) of the locking member (31) is cooperable with a locking pin (26) forming part of the linkage system (25, 27) so as to prevent, when positioned in its locking position, an increase of said distance between said pivot points ( 26, 28) of said link (27) in said direction and said hooked end (32) is movable between its locking and unlocking positions in a direction generally perpendicular to the direction of movement of the locking pin (26) when the linkage system (25, 27) is moved away from its retracted position; the arrangement being such that the force on the hooked end (32) of the locking member (31) created by an attempted actuation of the associated actuator means (41) is minimized whereby the force required to move the locking member (31) to the unlocking position is also minimized.

13. A bale handling apparatus according to any of the preceding claims, characterized in that the movable tine means (19) of each bale pick-up device (4) are removably mounted on a carrier (18) which itself is pivotally mounted on the forward end of the corresponding main beam (11) whereby the tine means (19) can be reversed on that carrier (18) for shipping and/or transport purposes.

14. A bale handling apparatus according to claim 3 or any of the claims 4 to 13 when appended to claim 3, characterized in that the actuator means are in the form of double-acting hydraulic actuators (41) connected in parallel to a source of pressure fluid via control valve (48) which, in one position directs pressure fluid to extend the actuators (41), in another position directs pressure fluid to retract the actuators (41) and in still another position by-passes the pressure fluid to a tank.

**Revendications**

1. Appareil de manutention de balles comportant :
   - un châssis principal (10) qui s'étend, d'une manière générale, transversalement;
   - plusieurs dispositifs ramasseurs de balles indépendants (4) montés sur le châssis principal (10) et respectivement pourvus de moyens formant dents mobiles (19) qui, dans une position active, viennent en prise avec une balle (21, 22) et, dans une position inactive, sont rétractés à distance d'une balle (21, 22), et
   - des moyens d'actionnement (41) associés à chacun des dispositifs ramasseurs de balles (4) correspondants et aptes à opérer pour déplacer les moyens formant dents mobiles (19) de ceux-ci en direction et à distance de la position active,
      caractérisé en ce que :
   - les moyens d'actionnement (41) des dispositifs ramasseurs de balles (4) respectifs peuvent être raccordés en parallèle à des moyens de commande communs et,
   - des moyens de verrouillage déverrouillables (29) sont associés aux moyens formant dents mobiles (19) de chaque dispositif ramasseur de balles (4) pour verrouiller lesdits moyens formant dents mobiles (19) dans la position inactive; la conception étant telle que seuls les moyens formant dents mobiles (19) qui sont déverrouillés vis-à-vis d'un déplacement dans la position active et qui n'ont pas encore atteint cette dernière position, seront déplacés dans ladite position active, lorsque les moyens de commande communs seront actionnés pour exciter les moyens d'actionnement (41) dans le sens propre à déplacer les moyens formant dents mobiles (19) dans la position active.

2. Appareil de manutention de balles selon la revendication 1, caractérisé en ce que chaque dispositif ramasseur de balles (4) comporte une poutre principale (11) qui s'étend, d'une manière générale, perpendiculairement au châssis principal (10), dans l'ensemble, transversal, et qui supporte d'une manière fonctionnelle les moyens formant dents mobiles (19) correspondants, d'une manière générale, au niveau ou à proximité de son extrémité avant.

3. Appareil de manutention de balles selon la revendication 1 ou 2, caractérisé en ce que les moyens d'actionnement (41) et les moyens de commande communs sont du type hydraulique.

4. Appareil de manutention de balles selon l'une quelconque des revendications précédentes, caractérisé en ce que chaque dispositif ramasseur de balles (4) est pourvu de moyens détecteurs de balles (37, 38); lesdits moyens détecteurs de balles (37, 38) de chaque dispositif ramasseur (4) étant associés aux moyens de verrouillage (29) de chacun desdits dispositifs ramasseurs (4) de façon que les moyens de verrouillage (29) soient déplacés dans la position de déverrouillage, lorsque les moyens détecteurs de balles (37, 38) détectent une balle (21, 22) correctement positionnée par rapport audit dispositif ramasseur de balles (4) et prête à être ramassée par celui-ci.

5. Appareil de manutention de balles selon la revendication 4, caractérisé en ce que les moyens détecteurs de balles (37, 38) de chaque dispositif ramasseur de balles (4) comportent un levier coudé (38, 37) relié d'une manière fonctionnelle aux moyens de verrouillage (29) correspondants dudit dispositif ramasseur (4) et comportant un bras (38) qui, en service, est mis en contact avec et déplacé par une balle (21, 22) correctement positionnée par rapport audit dispositif ramasseur de balles (4) et prête à être ramassée par celui-ci.

6. Appareil de manutention de balles selon l'une quelconque des revendications précédentes, caractérisé en ce que les moyens de verrouillage déverrouillables (29) de chaque dispositif ramasseur de balles (4) comportent :
   - un système de tringlerie (25, 27) accouplé avec les moyens formant dents mobiles (19) dudit dispositif ramasseur (4) en vue de se déplacer en synchronisme avec eux, et
   - un organe de verrouillage (31) apte à coopérer d'une manière déverrouillable avec ledit système de tringlerie (25, 27) pour, selon le cas, permettre ou empêcher un déplacement de ce système (25, 27) et, par conséquent, également des moyens formant dents mobiles (19) avec lesquels ledit système (25, 27) est accouplé.

7. Appareil de manutention de balles selon la revendication 6, lorsque celle-ci est dépendante de la revendication 2, caractérisé en ce que le système de tringlerie (25, 27) de chaque dispositif ramasseur de balles (4) comporte une tige (25) associée d'une manière fonctionnelle, au niveau de l'une de ses extrémités, aux moyens formant dents mobiles (19) correspondants et reliée d'une manière pivotante, au niveau de son autre extrémité (26), à l'une des extrémités d'une tringle (27) dont l'autre extrémité (28) est montée pivotante sur la poutre principale (11) dudit dispositif ramasseur de balles (4); la tige (25) et la tringle (27) définissant un organe extensible qui est maintenu dans une position rétractée par l'organe de verrouillage (31) correspondant, lorsque ce dernier est dans la position de verrouillage pour empêcher un déplacement desdits moyens formant dents mobiles (19) dans la position active à partir de la position inactive, et qui peut se déplacer dans la position étendue lors du déplacement desdits moyens formant dents mobiles (19) de la position inactive dans la position active, lorsque ledit organe de verrouillage (31) est dans la position de déverrouillage.

8. Appareil de manutention de balles selon la revendication 7, lorsque celle-ci est, en outre, également dépendante de la revendication 4 ou 5, caractérisé en ce que l'organe de verrouillage (31) de chaque dispositif ramasseur de balles (4) est pourvu d'une extrémité crochue (32) qui est apte à coopérer avec le système de tringlerie (25, 27) correspondant pour opérer un verrouillage des moyens formant dents mobiles (19) correspondants dans la position inactive, et qui fait partie d'un levier coudé (31, 33) monté pivotant sur la poutre principale (11) dudit dispositif ramasseur (4) et accouplé d'une manière fonctionnelle avec les moyens détecteurs de balles (37, 38) correspondants en vue d'être déplacé par ceux-ci dans la position de déverrouillage, lorsque les moyens détecteurs de balles (37, 38) détectent une balle (21, 22); les moyens de verrouillage déverrouillables (29) comportant également des moyens élastiques (39) qui agissent entre ladite poutre principale (11) et ledit levier coudé de verrouillage (31, 33) pour solliciter l'extrémité crochue (32) de l'organe de verrouillage (31) de celui-ci dans la position de verrouillage.

9. Appareil de manutention de balles selon la revendication 2 ou l'une quelconque des revendications 3 à 8, lorsque celles-ci sont dépendante de la revendication 2, caractérisé en ce que :
   - la poutre principale (11) de chaque dispositif ramasseur de balles (4) peut être ajustée d'une manière télescopique, et
   - les moyens formant dents mobiles (19) dudit dispositif ramasseur de balles (4) sont disposés, d'une manière générale, au niveau ou à proximité de l'extrémité libre de la partie télescopique (13) de ladite poutre principale (11); la conception étant de nature à pouvoir s'adapter à des longueurs variables de balles (21, 22) destinées à être manutentionnées par l'appareil.

10. Appareil de manutention de balles selon la revendication 9, caractérisé en ce que les moyens d'actionnement (41) de chaque dispositif ramasseur de balles (4) s'étendent entre les moyens formant dents mobiles (19) et la partie fixe (12) de la poutre principale télescopique (11) dudit dispositif ramasseur (4); lesdits moyens d'actionnement (41) pouvant être raccordés à ladite partie fixe (12) de la poutre principale télescopique (11) en de nombreux emplacements dans le sens de la longueur de celle-ci, afin de s'adapter à des longueurs différentes de balles (21, 22) destinées à être manutentionnées par l'appareil.

11. Appareil de manutention de balles selon la revendication 9 ou 10, lorsque celle-ci est dépendante de la revendication 7, caractérisé en ce que la tige (25) du système de tringlerie (25, 27) des moyens de verrouillage (29) est télescopique afin que sa longueur puisse être ajustée pour s'adapter à des longueurs variables de balles (21, 22) destinées à être manutentionnées par l'appareil.

12. Appareil de manutention de balles selon la revendication 8, lorsque celle-ci est dépendante de la revendication 7, caractérisé en ce que :
   - deux points de pivotement (26, 28) de la tringle (27) qui fait partie du système de tringlerie (25, 27) sont décalés l'un par rapport à l'autre d'une distance relativement faible, lorsque ledit système de tringlerie (25, 27) est dans la position rétractée et qu'on les considère dans la direction, dans l'ensemble, perpendiculaire par rapport à l'orientation de la tige (25) dudit système (25, 27); et
   - l'extrémité crochue (32) de l'organe de verrouillage (31) est apte à coopérer avec un axe de verrouillage (26) qui fait partie du système de tringlerie (25, 27) pour, lorsqu'elle est placée dans sa position de verrouillage, empêcher que de ladite distance entre lesdits points de pivotement (26, 28) de ladite tringle (27) n'augmente dans ladite direction, et ladite extrémité crochue (32) est mobile entre ses positions de verrouillage et de déverrouillage dans une direction, dans l'ensemble, perpendiculaire au sens de déplacement de l'axe de verrouillage (26), lorsque le système de tringlerie (25, 27) est déplacé à distance de sa position rétractée; la conception étant telle que la force exercée sur l'extrémité crochue (32) de l'organe de verrouillage (31) engendrée par une tentative d'actionnement des moyens d'actionnement (41) associés est réduite au minimum, pour qu'ainsi la force nécessaire pour déplacer l'organe de verrouillage (31) dans la position de déverrouillage soit elle aussi réduite au minimum.

13. Appareil de manutention de balles selon l'une quelconque des revendications précédentes, caractérisé en ce que les moyens formant dents mobiles (19) de chaque dispositif ramasseur de balles (4) sont montés d'une manière amovible sur un élément porteur (18) lui-même monté pivotant sur l'extrémité avant de la poutre principale (11) correspondante, pour qu'ainsi les moyens formant dents (19) puissent être inversés sur cet élément porteur (18) à des fins d'expédition et/ou de transport.

14. Appareil de manutention de balles selon la revendication 3 ou l'une quelconque des revendications 4 à 13, lorsque celles-ci sont dépendantes de la revendication 3, caractérisé en ce que les moyens d'actionnement se présentent sous la forme d'organes d'actionnement hydrauliques à double effet (41) raccordés en parallèle à une source de fluide sous pression par l'intermédiaire d'une soupape de commande (48) qui, dans une première position, dirige un fluide sous pression en vue d'une extension des organes d'actionnement (41), et qui dans une seconde position, dirige un fluide sous pression en vue d'une contraction des organes d'actionnement (41), tandis que dans une troisième position, elle détourne le fluide sous pression en direction d'un réservoir.

## Patentansprüche

1. Ballenhandhabungsvorrichtung mit:
   - einem sich allgemein in Querrichtung erstreckenden Hauptrahmen (10),
   - eine Mehrzahl von unabhängigen Ballengreifern (4), die auf dem Hauptrahmen (10) befestigt sind und jeweils bewegliche Zinkenteile (19) aufweisen, die in einer Betriebsstellung mit einem Ballen (21,22) in Eingriff kommen, während sie in der Ruhestellung aus der Bahn eines Ballens (21,22) zurückgezogen sind, und
   - Betätigungseinrichtungen (41), die jedem jeweiligen Ballengreifer (4) zugeordnet und derart beweglich sind, daß sie dessen bewegliches Zinkenteil (19) in die Betriebsstellung und aus dieser heraus bewegen,
   dadurch **gekennzeichnet,** daß:
   - die Betätigungseinrichtungen (41) der jeweiligen Ballenaufnehmereinrichtungen (4) parallel mit einer gemeinsamen Antriebseinrichtung verbindbar sind, und
   - lösbare Verriegelungseinrichtungen (29) den beweglichen Zinkenteilen (19) jedes Ballengreifers (4) zugeordnet sind, um die beweglichen Zinkenteile (19) in der Ruhestellung zu verriegeln, wobei die Anordnung derart ist, daß lediglich diejenigen beweglichen Zinkenteile (19), die für eine Bewegung in die Betriebsstellung entriegelt sind und die letztere Position noch nicht erreicht haben, in die Betriebsstellung bewegt werden, wenn die gemeinsame Antriebseinrichtung be-tätigt wird, um die Betätigungseinrichtun-gen (41) in einer Richtung zur Bewegung der beweglichen Zinkeneinrichtungen (19) in die Betriebsstellung anzutreiben.

2. Ballenhandhabungsvorrichtung nach Anspruch 1,
   dadurch **geikennzeichnet,** daß jeder Ballengreifer (4) einen Hauptträger (11) aufweist, der sich allgmein senkrecht zu dem allgemein in Querrichtung verlaufenden Hauptrahmen (10) erstreckt und der betriebsmäßig das entsprechende bewegliche Zinkenteil allgemein an oder benachbart zu seinem vorderen Ende trägt.

3. Ballenhandhabungsvorrichtung nach Anspruch 1 oder 2,
   dadurch **gekennzeichnet,** daß die Betätigungseinrichtungen (41) und die gemeinsame Antriebseinrichtung vom Hydrauliktyp sind.

4. Ballenhandhabungsvorrichtung nach einem der vorhergehenden Ansprüche,
   dadurch **gekennzeichnet,** daß jeder Ballengreifer (4) mit Ballenmeßfühlereinrichtungen (37,38) versehen ist, daß die Ballenmeßfühlereinrichtung (37,38) jedes Ballengreifers (4) der Verriegelungseinrichtung (29) jedes Ballengreifers (4) derart zugeordnet ist, daß die Verriege-lungseinrichtungen (29) in die Entriegelungs-stellung bewegt werden, wenn die Ballenmeßfühlereinrichtungen (37,38) einen Ballen (21,22) feststellen, der in richtiger Weise bezüglich des Ballengreifers (4) angeordnet ist und bereit ist, von diesem aufgenommen zu werden.

5. Ballenhandhabungsvorrichtung nach Anspruch 4,
   dadurch **gekennzeichnet,** daß die Ballenmeßfühlereinrichtungen (37,38) jedes Ballengreifers (4) einen Winkelhebel (38,37) umfasssen, der betriebsmäßig mit der entsprechenden Verriegelungseinrichtung (29) des Ballengreifers (4) verbunden ist und einen Arm (38) einschließt, der im Betrieb mit einem Ballen (21,22), der in geeigneter Weise bezüglich des Ballengreifers (4) angeordnet ist und zur Aufnahme durch diesen bereit ist, in Eingriff kommt und von diesem bewegt wird.

6. Ballenhandhabungsvorrichtung nach einem der vorhergehenden Ansprüche,
   dadurch **gekennzeichnet,** daß die lösbaren Verriegelungseinrichtungen (29) jedes Ballengreifers (4) folgende Teile umfassen:
   - ein Gestängesystem (25,27), das mit dem beweglichen Zinkenteil (19) des Ballengreifers (4) für eine Bewegung zusammen mit diesem gekoppelt ist, und
   - ein Verriegelungsteil (31), das lösbar mit dem Gestängesystem (25,27) zusammenwirkt, um in geeigneter Weise eine Bewegung dieses Systems (25,27) und damit auch des beweglichen Zinkenteils (19), mit dem das System (25,27) gekoppelt ist, zu ermöglichen oder zu verhindern.

7. Ballenhandhabungsvorrichtung nach Anspruch 6 unter Rückbeziehung auf Anspruch 2,
   dadurch **gekennzeichnet,** daß das Gestängessystem (25,27) jedes Ballengreifers (4) eine Stange (25) umfaßt, die betriebsmäßig an einem Ende dem entsprechenden beweglichen Zinkenteil zugeordnet ist und am anderen Ende (26) schwenkbar mit einem Ende eines Gestänges (27) verbunden ist, dessen anderes Ende (28) schwenkbar an dem Hauptträger (11) des Ballengreifers (4) befestigt ist, und daß die Stange (25) und das Gestänge (27) ein ausfahrbares Element bilden, das durch das entsprechende Verriegelungsteil (31) in einer zurückgezogenen Position gehalten wird, wenn das letztere sich in der Verriegelungsstellung befindet, um eine Bewegung des beweglichen Zinkenteils (19) von der Ruhestellung in die Betriebsstellung zu verhindern, und das durch die Bewegung des beweglichen Zinkenteils (19) von der Ruhestellung in die Betriebsstellung in die ausgefahrene Stellung bewegbar ist, wenn sich das Verriegelungsteil (31) in der Entriegelungsposition befindet.

8. Ballenhandhabungsvorrichtung nach Anspruch 7 unter weiterer Rückbeziehung auf einen der Ansprüche 4 oder 5, dadurch **gekennzeichnet,** daß das Verriegelungsteil (31) jedes Ballengreifers (4) mit einem hakenförmigen Ende (32) versehen ist, das mit dem entsprechenden Gestängesystem (25,27) zusammenwirken kann, um eine Verriegelung des entsprechenden beweglichen Zinkenteils (19) in der Ruhestellung zu bewirken, und das einen Teil eines Winkelhebels (31,33) bildet, der schwenkbar an den Hauptträger (11) des Ballengreifers (4) befestigt und betriebsmäßig mit der entsprechenden Ballenmeßfühlereinrichtung (37,38) gekoppelt ist, um von dieser in die Entriegelungsstellung bewegt zu werden, wenn die Ballenmeßfühlereinrichtung (37,38) einen Ballen (21,22) feststellt, wobei die lösbare Verriegelungseinrichtung (29) weiterhin elastische Einrichtungen (39) umfaßt, die zwischen dem Hauptträger (11) und dem Verriegelungs-Winkelhebel (31,33) wirken, um das hakenförmige Ende (32) des Verriegelungsteils (31) in die Verriegelungsstellung zu drücken.

9. Ballenhandhabungsvorrichtung nach Anspruch 2 oder einem der Ansprüche 3 bis 8 unter Rückbeziehung auf Anspruch 2, dadurch **gekennzeichnet,** daß:
   - der Hauptträger (11) jedes Ballengreifers (4) teleskopartig einstellbar ist, und
   - die beweglichen Zinkenteile (19) des Ballengreifers (4) allgemein an oder benachbart zum freien Ende des teleskopartigen Teils (13) des Hauptträgers (11) vorgesehen sind, wobei die Anordnung derart ist, daß sich eine Anpassung an sich ändernde Längen der von der Vorrichtung zu handhabenden Ballen (21,22) ergibt.

10. Ballenhandhabungsvorrichtung nach Anspruch 9, dadurch **gekennzeichnet,** daß sich die Betätigungseinrichtungen (41) jedes Ballengreifers (4) zwischen den beweglichen Zinkenteilen (19) und dem festen Teil (12) des teleskopartigen Hauptträgers (11) des Ballengreifers (4) erstrecken, und daß die Betätigungseinrichtungen (41) mit dem festen Teil (12) des teleskopartigen Hauptträgers (11) an einer Anzahl von Positionen entlang dessen Länge verbindbar sind, um eine Anpassung an unterschiedliche Längen der von der Vorrichtung zu handhabenden Ballen (21,22) zu erzielen.

11. Ballenhandhabungsvorrichtung nach Anspruch 9 oder 10 unter Rückbeziehung auf Anspruch 7, dadurch **gekennzeichnet,** daß die Stange (25) des Gestängesystems (25,27) der Verriegelungseinrichtung (29) teleskopartig ausgebildet ist, so daß deren Länge einstellbar ist, um eine Anpassung an unterschiedliche Längen der von der Vorrichtung zu handhabenden Ballen (21,22) zu erzielen.

12. Ballenhandhabungsvorrichtung nach Anspruch 8 unter Rückbeziehung auf Anspruch 7, dadurch **gekennzeichnet,** daß:
   - die beiden Schwenkpunkte (26,28) des Gestänges (27), das einen Teil des Gestängesystems (25,27) bildet, bei Betrachtung in der allgemein senkrechten Richtung bezüglich der Ausrichtung der Stange (25) des Systems (25,27) voneinander durch eine relativ kleine Strecke getrennt sind, wenn sich das Gestängesystem (25,27) in der zurückgezogenen Stellung befindet, und
   - das hakenförmige Ende (32) des Verriegelungsteils (31) mit einem Verriegelungszapfen (26) zusammenwirken kann, der einen Teil des Gestängesystems (25,27) bildet, so daß es bei Einstellung auf seine Verriegelungsstellung eine Vergrößerung des Abstandes zwischen den Schwenkpunkten (26,28) des Gestänges (27) in der genannten Richtung verhindert, wobei das hakenförmige Ende (32) zwischen seinen Verriegelungs- und Entriegelungsstellungen in einer Richtung allgemein senkrecht zur Bewegung des Verriegelungszapfens (26) beweglich ist, wenn das Gestängesystem (25,27) aus seiner zurückgezogenen Stellung herausbewegt wird, und wobei die Anordnung derart ist, daß die Kraft auf das hakenförmige Ende (32) des Verriegelungsteils (31), die durch eine versuchte Betätigung der zugehörigen Betätigungseinrichtungen (41) hervorgerufen wird, so gering wie möglich gehalten wird, so daß die Kraft, die erforderlich ist, um das Verriegelungsteil (31) in die Entriegelungsstellung zu bewegen, ebenfalls minimal gemacht wird.

13. Ballenhandhabungsvorrichtung nach einem der vorhergehenden Ansprüche, dadurch **gekennzeichnet,** daß die beweglichen Zinkenteile (19) jedes Ballengreifers (4) entfernbar auf einem Träger (18) befestigt sind, der seinerseits schwenkbar an dem vorderen Ende des entsprechenden Hauptträgers (11) befestigt ist, so daß die Zinkenteile (19) auf den Träger (18) für Verlade- und/oder Transportzwecke umkehrbar sind.

14. Ballenhandhabungsvorrichtung nach Anspruch 3 oder einem der Ansprüche 4 bis 13 unter Rückbeziehung auf Anspruch 3, dadurch **gekennzeichnet,** daß die Betätigungseinrichtungen die Form von doppeltwirkenden Hydraulikstellgliedern (41) aufweisen, die parallel mit einer Druckströmungsmittelquelle über ein Steuerventil (48) verbunden sind, das in einer Position Druckströmungsmittel zum Ausfahren der Stellglieder (41) zuführt, in einer anderen Position Druckströmungsmittel zum Zurückziehen der Stellglieder (41) zuführt und in einer letzten Position das Druckströmungsmittel im Nebenschluß einem Tank zuführt.

**FIG.3**

**FIG.1**

EP 0 317 670 B1

EP 0 317 670 B1

**FIG.2**